# EUROPÄISCHE PATENTANMELDUNG

(11) **EP 4 498 234 A1**
(43) Veröffentlichungstag der Anmeldung: **29.01.2025**
(21) Anmeldenummer: 23188306.7
(22) Anmeldetag: 28.07.2023
(51) Int. Cl.: G06F 8/65

(54) **VERFAHREN UND ANORDNUNG ZUR DURCHFÜHRUNG EINER SOFTWAREAKTUALISIERUNG IN EINEM AUS MEHREREN ENTITÄTEN, INSBESONDERE MASCHINEN UND/ODER GERÄTEN, GEBILDETEN SYSTEM, INSBESONDERE IM INDUSTRIELLEN UMFELD**

(71) Anmelder: Siemens Aktiengesellschaft, 80333 München (DE)
(72) Erfinder: Maier, Sebastian, 91330 Eggolsheim (DE); Salecker, Jürgen, 81827 München (DE)
(74) Vertreter: Siemens Patent Attorneys

(57) **Zusammenfassung**

Die Erfindung betrifft ein Verfahren zur Durchführung einer Softwareaktualisierung in einem aus mehreren Entitäten, insbesondere Maschinen und/oder Geräten, gebildeten System, insbesondere im industriellen Umfeld, bei dem eine Verteilung eines Softwareupdates an die Entitäten und zeitlich derart aufeinander abgestimmte lokale Installation des Softwareupdates auf den Entitäten erfolgt, dass zumindest der Start, Ablauf und/oder das systemweite Aktivieren der jeweiligen lokalen Softwareupdates in Abhängigkeit zumindest eines mit zumindest der jeweiligen Entität korrelierenden Parameters zu individuell den Entitäten zugeordneten Zeitpunkten erfolgt. Ferner betrifft die Erfindung eine Anordnung zur Durchführung des Verfahrens.

## Beschreibung

Die Erfindung betrifft ein Verfahren zur Durchführung einer Softwareaktualisierung in einem aus mehreren Entitäten, insbesondere Maschinen und/oder Geräten, gebildeten System, insbesondere im industriellen Umfeld, gemäß dem Oberbegriff des Anspruchs 1 sowie eine Anordnung zur Durchführung einer Softwareaktualisierung in einem aus mehreren Entitäten, insbesondere Maschinen und/oder Geräten, gebildeten System im industriellen Umfeld gemäß dem Oberbegriff des Anspruchs 13.

Es ist bekannt, dass Softwareaktualisierungen, also das Einspielen und die Inbetriebnahme von Software Upgrades und Softwareupdates (im Rahmen dieser Offenbarung synonym zueinander verwandt), von komplexen Systemen, die aus mehreren Geräten oder Maschinen bestehen, beispielsweise im industriellen Umfeld, eine größere Herausforderung darstellen als es bei einfachen, aus einem oder wenigen Geräten bestehenden Systemen der Fall wäre. Dies ist unter anderem dadurch begründet, dass in einer vernetzten Produktionseinheit, wie sie im industriellen Umfeld zu finden ist, es immer Abhängigkeiten der Geräte durch deren Interaktionen im Rahmen des Fertigungsprozesses gibt, insbesondere auch allgemeinere Abhängigkeiten, ob und wie beispielsweise diese Geräte miteinander kommunizieren.

In der Regel beinhaltet dabei eine neue Softwareversion entweder Fehlerbehebungen, so genannte "bug-fixes", und/oder Erweiterungen, die sehr oft nicht nur auf ein Gerät bezogen sind, sondern eine ganze Gruppe von Geräten betreffen.

Werden im industriellen Umfeld die Geräte hierfür sequenziell mit einer neuen Softwareversion versorgt, muss das Gesamtsystem beziehungsweise die Produktion in der Regel vollständig gestoppt werden. Dies ist vor allem dann der Fall, wenn sich durch die neue Softwareversion Änderungen in der Interaktion mit der Umwelt oder anderen (Produktions-)Geräten ergeben.

Da dies im Grunde die Regel ist, besteht der Nachteil, dass es gemäß Stand der Technik üblich ist die beteiligten Geräte lediglich bei stillstehendem Betrieb, also beispielsweise bei stillstehender Fertigungsanlage, zu aktualisieren. Dies geht mit einem hohen Aufwand einher, kann eine lange Zeit dauern und hohe Kosten verursachen.

Die der Erfindung zugrunde liegende Aufgabe ist es daher, eine technische Lösung anzugeben, mit der der Nachteil des Standes der Technik überwunden wird, insbesondere ist es die Aufgabe der Erfindung eine technische Lösung anzugeben, bei der Softwareaktualisierungen bei laufenden Prozessen im industriellen Umfeld weitestgehend unterbrechungsfrei durchgeführt werden können.

Verfahren zur Durchführung einer Softwareaktualisierung in einem aus mehreren Entitäten, insbesondere Maschinen und/oder Geräten, gebildeten System im industriellen Umfeld ausgehend von den Merkmalen gemäß dem Oberbegriff des Anspruchs 1, durch dessen Merkmale sowie durch die Anordnung ausgehend von den Merkmalen des Oberbegriffs des Anspruchs 11, durch dessen kennzeichnende Merkmale gelöst.

Bei dem Verfahren zur Durchführung einer Softwareaktualisierung in einem aus mehreren Entitäten, insbesondere Maschinen und/oder Geräten, gebildeten System, insbesondere im industriellen Umfeld, erfolgt eine Verteilung eines Softwareupdates an die Entitäten und zeitlich derart aufeinander abgestimmte lokale Installation des Softwareupdates auf den Entitäten, dass zumindest der Start, Ablauf und/oder das systemweite Aktivieren der jeweiligen lokalen Softwareupdates in Abhängigkeit zumindest eines mit zumindest der jeweiligen Entität korrelierenden Parameters zu individuell den Entitäten zugeordneten Zeitpunkten erfolgt.

Die Erfindung ermöglicht eine unterbrechungsfreie Installation von Softwareupdates bzw. Softwareupgrades, insbesondere im industriellen Umfeld, indem für jede Entität individuell Start, Ablauf und/oder systemweites Aktivieren zu einem optimalen Zeitpunkt durchgeführt werden kann, da die Berücksichtigung des korrelierenden Parameters der jeweiligen lokalen Installationen so genutzt werden kann, dass keine eine Unterbrechung bewirkende Störung erfolgen muss. Auf Grundlage der Berücksichtigung sind darüber hinaus auch weitere Optimierungen möglich. Beispielsweise lässt sich die Gesamtdauer bis zur systemweiten Aktivierung verkürzen.

Die Anordnung zur Durchführung einer Softwareaktualisierung in einem aus mehreren Entitäten, insbesondere Maschinen und/oder Geräten, gebildeten System, insbesondere im industriellen Umfeld, ist gekennzeichnet durch Mittel zur Durchführung des Verfahrens und/oder einer seiner Weiterbildungen.

Die erfindungsgemäße Anordnung ermöglicht die Implementierung des erfindungsgemäßen Verfahrens und/oder seiner Weiterbildungen und damit mutatis mutandis auch die Realisierung der Vorteile des Verfahrens und/oder seiner Weiterbildungen.

Vorteilhafte Ausgestaltungen und Weiterbildungen der Erfindung sind durch die Unteransprüche angegeben.

Gemäß einer Weiterbildung des erfindungsgemäßen Verfahrens wird als korrelierender Parameter zumindest eine Prozesszeiten beeinflussende, entitätsbezogene Größe, wie beispielsweise Latenzzeit, Umschaltzeit, auf die Entität wirkende Effekte der Einbettung ins Gesamtsystem, Gerätetyp, Erfolg des Softwareupdates und andere sich, insbesondere zeitkritisch, auswirkende Größen, für die Abstimmung berücksichtigt. Durch Berücksichtigung einer oder mehrerer entitätsbezogener Größen kann die Erfindung auch individuelle Merkmale der Entitäten in die, die Optimierung bewirkende, Abstimmung einfließen lassen und dabei sowohl auf dynamische, also sich während des Betriebs verändernde, physikalische Größen eingehen und/oder feste Größen, wie sie beispielsweise durch den Typ, Betriebsweise, Betriebsparameter wie physikalische Eigenschaften der Einsatzumgebung, und/oder Einstellung des Geräts bzw. Maschine gegeben sein können. Mindestens zeitkritisch bis hin zur totalen Blockade durch Misslingen des systemweiten Updates kann der ausbleibende Erfolg einer Installation auf der Entität sein. Dies wird mit der vorliegenden Weiterbildung auch auffangbar, weil beispielsweise die systemweite Aktivierung erst nach Rückmeldung des Erfolges durchgeführt wird und/oder die Vorgabe individueller Aktivierungszeitpunkte zur Koordination/Orchestrierung des Aktivschaltens zeitlich erst nach einer derartigen Rückmeldung erfolgt. Einer zuvor negativen Rückmeldung kann dabei beispielsweise nach Durchführung einer Fehlerprozedur eine positive Rückmeldung nachfolgen.

Alternativ bzw. bevorzugt ergänzend kann das erfindungsgemäße Verfahren derart weitergebildet werden, dass als korrelierender Parameter zumindest eine Prozesszeiten beeinflussende, systembezogene Größe, wie beispielsweise Systemauslastung, Systemdimension, Systemkomplexität, Systembestandteile und andere sich, insbesondere zeitkritisch, auswirkende Größen, für die Abstimmung berücksichtigt wird. Hierdurch wird eine ganzheitliche Betrachtung möglich, die das gegenseitige Aufeinander Einwirken der Entitäten in einem System und dessen Folgen berücksichtigt, so dass es, indem es eine oder mehrere der durch das System bestehenden physikalischen Einflussgrö-ßen in Abstimmung einfließen lässt, die Optimierung weiter verbessert. Dabei können ebenfalls sowohl dynamische als auch feste physikalische Größen herangezogen werden.

Bevorzugt wird das erfindungsgemäße Verfahren hierzu derart weitergebildet, dass die zumindest eine Prozesszeiten beeinflussende Größe, insbesondere durch eine zentrale Entität, abrufbar durch manuelle Eingabe und/oder automatisierte Erfassung, bereitgestellt ist. Hierdurch kann bei der erfindungsgemäßen Verfahrensweise sichergestellt werden, dass stets aktuelle Werte für die Optimierung verfügbar gemacht werden, die die grundsätzliche Möglichkeit einmalig fest für die Verfahrensweise vorgegebener korrelierender Parameter je Entität ergänzen oder ersetzen kann.

In der Regel sind in einem, insbesondere im industriellen Umfeld eingesetzten, System eine oder mehrere Steuereinrichtungen, also beispielsweise Entitäten, die eine steuernde und/oder Masterfunktion im Sinne einer Master-/Slave-Funktionalität für die anderen Entitäten des Systems bieten, gegeben. Daher ist die Weiterbildung des erfindungsgemäßen Verfahrens derart, dass als zentrale Stelle eine mit dem System funktional verbundene, insbesondere in der Steuereinrichtung des Systems integrierte, Steuereinrichtung betrieben wird, eine Möglichkeit, das erfindungsgemäße Verfahren einfach unter weitestgehender Vermeidung der Veränderung bekannter Strukturen in das System zu implementieren.

Einer der für die Optimierung besonders geeigneten Werte für die Abstimmung ist gegeben, wenn das erfindungsgemäße Verfahren derart weitergebildet wird, dass für die Abstimmung durch die zentrale Stelle eine Synchronisation der lokalen Zeit der Entitäten auf einen, insbesondere im Bereich von +/-100ns maximaler Abweichung liegenden, Wert herbeigeführt wird. Herbeiführen kann dabei eine oder sich, insbesondere periodisch, wiederholende Handlungen, die die Synchronisation bewirken, umfassen, so dass die Synchronisation stets gewährleistet bleibt.

Die Wirkung dieses Wertes auf die Optimierung wird noch verbessert, wenn das erfindungsgemäße Verfahren derart weitergebildet wird, dass für die Abstimmung die Entitäten derart betrieben werden, dass deren, als so genannte "Clock" bekannte, Zeitbasis mit einer, insbesondere im Bereich von 1ppm bis 100ppm liegenden, systemangepassten Genauigkeit, insbesondere durch Betreiben geeigneter Hardware, gewährleistet wird.

Systemangepasste Genauigkeit bedeutet, dass diese Weiterbildung je nach Art des Systems, die beispielsweise abhängig vom Einsatzgebiet/dem Anwendungsfall sich unterscheiden kann, der Wert der Genauigkeit, der gewährleistet wird, variieren kann. Gewährleisten bedeutet, dass die akkurate Einhaltung des Wertes erreicht werden soll, der Wert je System als individueller Sollwert vorgeben ist. Dies ermöglicht einen flexiblen Einsatz der Erfindung, beispielsweise in Kraftwerken, im industriellen Umfeld und/oder Einsatz mit seismischem Bezug, wie beispielsweise der Rohstoffgewinn im Upstream-Sektor, wie der Erdölgewinnung, oder dem Bergbau. Eine Anwendung mit seismischem Bezug wird beispielsweise in der Regel eine Genauigkeit im Bereich von 1ppm erfordern, während beispielsweise für einen Einsatz im industriellen Umfeld, die Erfindung in der Regel mit einer geringeren Genauigkeit, beispielsweise im Bereich von 100 ppm, implementiert werden könnte. Im "Bereich von" bedeutet hierbei, dass, der Wert der Genauigkeit gemäß Erfindung, welcher ausreicht, letztlich durch den korrelierenden Parameter und/oder die Systemangepasstheit bestimmt ist. Die Bereichsgrenzen bzw. deren Werte sind daher nicht als harte Grenzen zu sehen und der tatsächlich implementierte Wert kann die Grenzen, insbesondere unter Berücksichtigung der genutzten Hardware, durchaus über- bzw. unterschreiten. Allerdings sind für die in dem genannten Bereich liegenden tatsächlichen Werte, insbesondere in den genannten Anwendungsfällen, optimale Ergebnisse beim Einsatz der Erfindung zu erwarten.

Eine weitere vorteilhafte Weiterbildung des erfindungsgemäßen Verfahrens ist gegeben, wenn den Entitäten zur Synchronisation zumindest einmal eine, insbesondere eine "Global Positioning System"-, GPS-Zeit, und/oder durch hochgenaue, insbesondere Satellitenbasierte, Zeitreferenzsysteme vorgegebene, absolute Zeit sowie die lokale Zeit übermittelt wird. Hierdurch werden die Geräte zu einem oder, insbesondere sich periodisch wiederholenden, Zeitpunkten in die Lage versetzt, für zumindest teilweise individuelle Durchführungszeitpunkte im Rahmen des Starts, Ablaufs und/oder der systemweiten Aktivierung stets eine Basis zu haben, welche ein Zeitdelta zwischen den Entitäten auf einem Minimalwert, insbesondere "null", gewährleistet.

Eine für die Umsetzung der Erfindung besonders geeignete Implementierung ist gegeben, wenn das erfindungsgemäße Verfahren derart betrieben wird, dass für die Abstimmung das System, insbesondere die Entitäten, gemäß dem so genannten, insbesondere gemäß IEEE 1588-2008 spezifizierten, "Precision Timing Protocol", PTP, betrieben wird. Dieses Protokoll bietet eine Reihe von Funktionalitäten, die die Erfindung zur Umsetzung seiner Verfahrensweise nutzen kann. Diese Funktionalitäten sind auch erprobt und einfach implementierbar und weisen eine geringfügige Komplexität auf. Daher kann zum Teil vorhandene Hardware durch geeignete Modifikation von beispielsweise Treibersoftware auf die Durchführung des erfindungsgemäßen Verfahrens umgerüstet werden. Auch existiert kostengünstig beziehbare Hardware, in Form eines Ethernet PHY Chips, die dieses Protokoll bereits einsetzt und die in den erfindungsgemäßen Anordnungen einsetzbar ist bzw. diese mit realisiert.

Die Störungsfreiheit kann insbesondere dann erreicht werden, wenn das erfindungsgemäße Verfahren derart weitergebildet wird, dass
a) eine Verteilung eines Softwareupdates auf die das System bildenden Entitäten erfolgt,
b) die Entitäten den jeweiligen Softwareupdate lokal auf den Entitäten speichern,
c) für jede Entität jeweils eine Zeit zur lokalen Durchführung des Softwareupdates auf der Entität vorgegeben wird,
d) eine Synchronisierung der jeweiligen lokalen Zeit der Entitäten herbeigeführt wird,
e) die Installation der lokalen Softwareupdates auf Grundlage der Zeitvorgabe erfolgt bis der Softwareupdate für alle Entitäten, die den Softwareupdate gespeichert haben, abgeschlossen ist,
f) eine systemweite Aktivierung der durch das Softwareupdate aktualisierten Software nach Abschluss aller lokal durchgeführten Softwareupdates zu individuell vorgegebenen Zeitpunkten erfolgt. Hierdurch ist gewährleistet, dass auf allen Entitäten die neue Software quasi, also unter Berücksichtigung von Latenzen, die ja erfindungsgemäß durch die individuellen Zeitpunkte hinsichtlich einer Störwirkung kompensiert werden, etc., zeitgleich benutzt wird.

"Nach Abschluss" bedeutet hierbei, dass die Installationen auf dem jeweiligen Gerät erfolgreich beendet wurden. D.h. die individuellen Aktivierungszeitpunkte im Rahmen der systemweiten Aktivierung liegen erfindungsgemäß auf vorteilhafte Weise zeitlich nach Abschluss vor, also erst wenn diese Bedingung erfüllt ist, so dass unkontrollierte Zustände des Gesamtsystems durch einzelne fehlgeschlagene Installationen vermieden werden. Dies kann beispielsweise so implementiert werden, dass die Planung individueller Zeitpunkte auch erst nach Abschluss erfolgt und/oder so implementiert werden, dass die systemweite Aktualisierung zu vorab verteilten individuellen Aktivierungszeitpunkten erst nach Rückmeldung des Abschlusses der Installation gestartet wird und/oder so lange suspendiert wird, bis der Erfolg rückgemeldet worden ist.

Insbesondere durch diese Weiterbildung wird eine Mehrstufigkeit des erfindungsgemäßen Verfahrens deutlich, die darin gesehen werden kann, dass
- ein frühzeitiges Installieren der neuen Softwareversion möglich ist, insbesondere während des Laufs der alten Version und insbesondere neben der bisherigen SW-Version laufend, beispielsweise bereits ausreichend Zeit zu haben, um Daten zu erfassen und Zustände gemäß neuer Software aufzubauen ohne Einfluss auf Ausgaben/Umwelt vornehmen zu können, sowie
- eine Aktivierung bzw. Übergabe der Kontrolle, zum Beispiel über die Ausgabe/Steuerung, an die neue SW-Version zu einem exakt definierten und ggf. Geräte-spezifischen Zeitpunkt des koordinierten systemweiten Umschaltens (Aktivierung) ermöglicht und dennoch ein koordiniertes Interagieren der Geräte während dem Umschalten erlaubt.

Durch dieses Vorgehen ist sichergestellt, dass die neue Version zuverlässig, nahtlos und ohne nennenswerte Unterbrechung die Kontrolle übernehmen kann.

Alternativ oder ergänzend kann das erfindungsgemäße Verfahren derart weitergebildet werden, dass die Entitäten derart betrieben werden, dass bis zum Zeitpunkt einer systemweiten Aktivierung der aktualisierten Software auf den Entitäten, die die Installation des Softwareupdates abgeschlossen haben, eine Inbetriebnahme der aktualisierten Software derart durchgeführt wird, dass ein parallel laufender Betrieb der aktualisierten Software und der vorangegangenen Softwareversion auf der Entität derart entkoppelt erfolgt, dass die real erfassbare Wirkweise, insbesondere Zustände und Funktionen, der Entität in der Zeit des parallelen Betriebs durch die vorangegangene Softwareversion und nach Inbetriebnahme durch die aktualisierte Software bestimmt wird. Dies kann die erwähnte Kompensierung noch weiter verbessern, da die neue Software im Grunde läuft, aber erfindungsgemäß in einer Art Sandbox betrieben wird, so dass sie nach außen nicht wirkt. Die Umschaltung kann dadurch praktisch umgehend und für die jeweilige Entität, aber auch das System "seamless" erfolgen.

Eine vorteilhafte Weiterbildung des erfindungsgemäßen Verfahrens ist dadurch gegeben, dass die Aktivierung, insbesondere getriggert durch die Steuereinrichtung bei Abschluss aller lokal durchgeführten Softwareupdates, auf den Entitäten durch Versenden einer Nachricht, durch Erreichen des vorgegebenen Startzeitpunkts und/oder eines aus dem Ablauf den Entitäten zumindest ableitbaren Zeitpunkts ausgelöst wird. Hierdurch kann die Umschaltung kontrolliert und zur Optimierung beitragend durchgeführt werden.

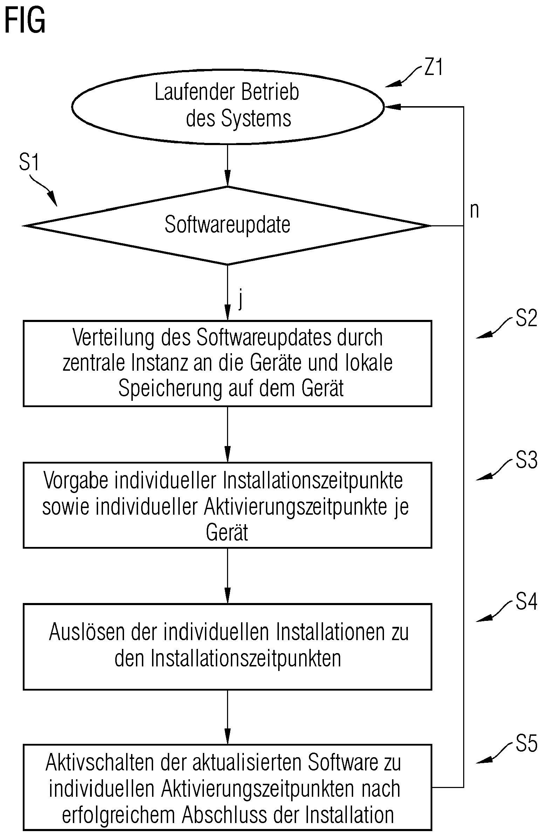

Weitere Vorteile und Details der Erfindung werden ausgehend von dem in der einzigen FIGUR dargestellten beziehungsweise angegebenen Ausführungsbeispielen der Erfindung erläutert.

### Dabei zeigt

- FIGUR: schematisch ein Ausführungsbeispiel des erfindungsgemäßen Verfahrens, welches gemeinsam mit den Merkmalen eines Ausführungsbeispiels der erfindungsgemäßen Anordnung erläutert wird.

Bei den im Folgenden in der FIGUR erläuterten Ausführungsbeispielen handelt es sich um bevorzugte Ausführungsformen und Weiterbildungen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind.

Des Weiteren sind die beschriebenen Ausführungsformen auch durch weitere der bereits beschriebenen Merkmale der Erfindung ergänzbar.

In der FIGUR ist schematisch in Form eines Ablaufdiagramms ein Ausführungsbeispiel des erfindungsgemäßen Verfahrens dargestellt. Der Ablauf des Verfahrens gemäß Erfindung erfordert eine erfindungsgemäß ausgestaltete Anordnung, so dass zum Verständnis des Ausführungsbeispiels der Erfindung Merkmale eines Ausführungsbeispiels vorab und gemeinsam mit den Verfahrensmerkmalen erläutert werden.

Gemäß Ausführungsbeispiel der erfindungsgemäßen Anordnung weisen alle Maschinen, also alle Geräte, eines Systems, in welchem eine erfindungsgemäß durchgeführte Softwareaktualisierung möglich sein soll, unter anderem die im Folgenden angegebenen Merkmale auf.

Beispielsweise verfügen gemäß Ausführungsbeispiel der Anordnung die beteiligten Geräte über einen Mechanismus zum Upgrade/Update im laufenden Betrieb.

Dieser kann beispielsweise in Form eines "seamless upgrade" Patterns implementiert sein, welches die parallele Ausführung von alter und neuer Version und ein kontrolliertes Umschalten zwischen beiden mit bekannter Latenz ermöglicht. Dies kann unter Nutzung der vorhandenen Steuerungen bzw. Prozessoren gesteuert erfolgen, so dass dies wie ein die genannten Funktionalitäten (paralleles Ausführen, koordiniertes Umschalten) bereitstellendes Modul wirkt bzw. eine Ausführungsvariante davon darstellt.

Da in der Regel Prozessoren/Steuerungen in so einem System vorhanden sein werden, kann das auch als Computerprogrammprodukt ins System gebracht und gesteuert ausgeführt werden.

Als ein weiteres Merkmal des Ausführungsbeispiels der erfindungsgemäßen Anordnung ist der Wert der Zeit auf allen Maschinen gleichgesetzt bzw. vorgegeben. Gleich heißt im Rahmen der Erfindung bzw. in Systemen, die Laufzeiten und Latenzen haben, dass geringste Abweichungen als Toleranz zulässig sind. Beispielsweise wird gemäß Ausführungsbeispiel der Erfindung die Zeit auf allen Geräten mit einer Abweichung von ca. +/-100ns synchronisiert sein.

Das Ausführungsbeispiel der Erfindung sieht dazu vor, dass alle Geräte das PTP (Precision Timing Protocol, IEEE 1588-2008) unterstützen, welches gemäß Ausführungsbeispiel von einer zentralen Instanz durch einen präzisen Taktgeber, dem so genannten GPS und einer "Miniatur Atomic Clock", MAC, mit einer genauen Zeit versorgt wird.

Das PTP hat dabei den Vorteil, dass es im Gegensatz zu dem bekannten NTP (Network Timing Protocol) Rücksicht auf die Laufzeiten im Netz (Internet) nimmt, und in der Lage ist unterschiedliche Signallaufzeit mit zu berücksichtigen.

Gemäß dem Ausführungsbeispiel der erfindungsgemäßen Verfahrensweise benutzt jede Maschine einerseits das PTP-Protokoll, indem es die Verfahrensschritte entsprechend diesem bzw. basierend auf dem Protokoll, also als implementierte Software, durchführt, beruht aber andererseits auch auf einer dies hardwaremäßig unterstützenden Plattform (Beispiel: Ethernet Phy: "Broadcom BCM5421").

Mit den Ausführungsbeispielen des erfindungsgemäßen Verfahrens und den Ausführungsbeispielen der erfindungsgemäßen Anordnung, die Soft- und Hardware-seitig PTP unterstützen, kann die Erfindung die Übertragung und Koordination genauer Zeitinformationen zwischen verschiedenen Geräten, insbesondere in einem Netzwerk wie es im industriellen Umfeld gebildet wird, auf einfache und effiziente Weise ermöglichen und sich dabei einer oder mehrerer Funktionalitäten des PTP, wie beispielsweise Zeitstempelung, Verzögerungskompensation, periodischer Aktualisierung sowie Maßnahmen zur Gewährleistung einer akkuraten Genauigkeit und Kompensation, bedienen.

Eine Zeitstempelung kann dabei derart erfolgen, dass die zentrale Einrichtung periodisch Timing-Nachrichten erzeugt, die als so genannte Sync- und Follow-Up-Frames ausgestaltet sein können, welche an die Geräte gesendet werden. Diese Frames enthalten Zeitstempel, die den Zeitpunkt der Übertragung widerspiegeln, und liefern so in regelmäßigen Abständen eine Bezugsgröße.

Das kann beispielsweise mit dem PTP Protokoll in Verbindung mit einem Linux Treiber realisiert werden und muss dann jeweils in eine Applikation auf den Entitäten übernommen werden.

Eine Verzögerungskompensation kann derart realisiert sein, dass die Geräte, die die Timing-Nachrichten von der zentralen Instanz mittels Zeitstempel erhalten, die Übertragungsverzögerungen berechnen und entsprechend kompensieren, um eine genauere Synchronisierung zu erreichen.

Dies wird beispielsweise auf Hardwareebene, insbesondere dem so genannten Physical Layer, beispielsweise durch den PHY-Chip durchgeführt.

Gemäß dem PTP ist es möglich, die zentrale Instanz zu bestimmen, beispielsweise kann alternativ oder ergänzend das Gerät mit der genauesten internen Uhr als zentrale Stelle ausgewählt werden. Insbesondere im industriellen Umfeld wird als Weiterbildung der Einsatz einer unveränderlichen Instanz, beispielsweise eine vorhandene Steuereinrichtung, vorteilhafte Effekte haben, beispielsweise weil dies weniger komplex und/oder Aufwandsminimierend in die vorhandene Struktur implementiert werden kann.

Für eine akkurate Genauigkeit und Kompensation kann das PTP gemäß einer Weiterbildung auch auf Algorithmen zur Berechnung der Genauigkeit der internen Uhren der Geräte und zur Kompensation von störenden Faktoren, wie beispielsweise Netzwerkverzögerungen und Jitter, um eine präzisere Synchronisierung zu erreichen, zurückgreifen.

Durch das PTP-Protokoll sind - als Weiterbildung der Erfindung - periodische Aktualisierungen der Synchronisierungsinformationen möglich, die den Vorteil haben, Abweichungen in den internen Uhren der Knoten auszugleichen und eine kontinuierliche Genauigkeit sicherzustellen.

Eine hardwaremäßige Unterstützung, die als Weiterbildung der erfindungsgemäßen Anordnung in dem Ausführungsbeispiel vorteilhaft genützt werden könnte, wäre beispielsweise in der Verwendung des "Ethernet PHY Broadcom BCM5421", der sich zum Beispiel auf der "Raspberry, Compute Modul 4 Platform, "CM4" befindet, gegeben. Alternativ oder ergänzend kann als eine hierzu geeignete Hardware aber auch zum Beispiel ein so genannter ASIC herangezogen werden, welcher hierzu lediglich mit das erfindungsgemäße Verfahren implementierender TreiberSoftware entsprechend als unterstützende Hardware modifiziert ist.

Neben der Synchronisation der Geräte realisiert das Ausführungsbeispiel der erfindungsgemäßen Anordnung auch eine für die Durchführung des erfindungsgemäßen Verfahrens erforderliche Genauigkeit der Zeit.

Gemäß Ausführungsbeispiel wird dazu die lokale Uhrzeit der Geräte (also der Clock) mit einer ausreichenden Genauigkeit, die beim Ausführungsbeispiel bei ca. 100ppm liegt, zur Verfügung gestellt. Damit wird gemäß Erfahrungswerten zum Zeitpunkt der Erfindung in einem industriellen Umfeld in der Regel sichergestellt sein, dass auch bei länger dauerndem Upgrade kein signifikanter "Drift" der Zeit stattfinden kann. Mit anderen Worten wird damit eine evtl. Downtime des PTP Protocol entsprechend bemessen beziehungsweise berücksichtigt.

In anderen Anwendungen der Erfindungen, können andere Genauigkeitswerte zum Einsatz kommen.

Hierauf ist die Erfindung aber nicht begrenzt. Haben die Geräte beispielsweise eine Genauigkeit der lokalen Zeitbasis von ca. 10ppm, beispielsweise bei einem so genannten "Temperatur Compensated Oscillator", ist bereits systemimmanent eine ausreichende Genauigkeit vorhanden, so dass einzelne oder alle im Rahmen der Offenbarung genannten Weiterbildungen zur Genauigkeit entfallen bzw. alternativ gestaltet werden können und unter die Erfindung fallen, soweit sie vom Schutzbereich der Ansprüche abgedeckt sind.

Gemäß Weiterbildung der Erfindung wirkt sich die Systemangepasstheit also derart aus, dass der Wert vom Anwendungsfall, also von vom System gegebenen Größen, die auch durch den korrelierenden Parameter gegeben sind bzw. diesen bestimmen, und/oder den Ansprüchen an das System durch den konkreten Anwendungsfall, abhängt. In der Seismischen Industrie haben die eingesetzten Clocks eine Genauigkeit von 1ppm in einem Temperaturbereich von -40°C...80°C. Gemäß Erfahrungswert zur Zeit der Erfindung sind Werte im Bereich von 1ppm für die meisten Industrieanlagen nicht notwendig, man kann aber natürlich dennoch dort einen genaueren Wert vorgeben, um das Verfahren besonders robust zu gestalten.

Die Erfindung bewirkt, dass Umschalt-Zeitpunkte, bei denen das jeweilige Gerät des Systems zur neuen Softwareversion wechselt, für alle beteiligten Geräte bekannt und/oder aufeinander abgestimmt sind, um ein koordiniertes Umschalten zu ermöglichen. Dies kann beispielsweise vor Vorgabe der Zeitpunkte durch Systemtests ermittelt werden.

In einer ersten Ausgestaltungsvariante der Erfindung kann dies aber auch, insbesondere für einfache Systeme, vergleichsweise trivial beispielsweise durch zeitgleiches Umschalten aller Geräte realisiert werden. Alternativ oder ergänzend kann die Erfindung aber auch derart weitergebildet sein, dass die Umschaltung auf Grundlage von Wissen über das Gesamtsystem, dessen Abläufe, dessen Kommunikationsmuster und dessen Bestandteile, insbesondere teilweise zeitlich versetzt, erfolgt.

Dabei kann die Erfindung, insbesondere die erläuterten Ausführungsbeispiele, derart weitergebildet werden, dass dieses Wissen manuell bereitgestellt oder ggf. auch automatisiert ermittelt wird.

Die Erfindung, insbesondere die dargelegten Ausführungsbeispiele und Weiterbildungen, ermöglichen ein koordiniertes und synchrones Upgrade (bzw. Update) aller beteiligten Geräte bzw. Maschinen, welches zentral gesteuert und angestoßen werden kann, wobei "synchron" bedeutet, dass das Upgrade zu aufeinander abgestimmten Zeitpunkten erfolgt, die abhängig vom korrelierenden Parameter teilweise zeitversetzt vorgeben sind.

Das vereinfacht schematisch dargestellte einfache Ausführungsbeispiel des erfindungsgemäßen Verfahrens kann dabei derart implementiert sein, dass ausgehend von einem ersten Zustand Z1, in dem sich ein System mit mehreren Entitäten, also Geräte bzw. Maschinen, auf denen Software läuft, im laufenden Betrieb befinden, in einem ersten Schritt S1 ein Erkennen, dass ein Softwareupdate vorliegt, erfolgt. Die Ausdrücke "Update" und "Upgrade" im Dokument meinen, auch wenn es nicht ausdrücklich erwähnt wird, stets auch das andere und vice versa. Das Gleiche gilt für "Maschine/-n" und "Gerät/-e".

Dies kann beispielsweise durch eine aktive Abfrage von Systemparametern realisiert sein wie es in der FIGUR dargestellt ist oder direkt durch Triggersignale ausgelöst werden. Wird beim Erkennen im ersten Schritt S1 festgestellt, dass ein Softwareupdate vorliegt, wird gemäß Ausführungsbeispiel des erfindungsgemäßen Verfahrens in einem zweiten Schritt das Softwareupdate auf die Geräte verteilt und wird von jedem Gerät lokal gespeichert. Unter Softwareupdates sind die für eine Installation auf einem Gerät erforderlichen Daten, wie beispielsweise eine ausführbare Datei und/oder andere im Rahmen eines Updates erforderliche, insbesondere als Dateien organisierte Daten, zu verstehen.

Solche Daten können beispielsweise Konfigurationsparameter, wie beispielsweise für programmierbare Hardware, beispielsweise einen so genannten "Field-Programmable Gate Array", ein kompilierter Code, ein so genannter "source interpretierender" Code, beispielsweise ein Python-Code, Bilder und/oder sonstige Daten sein, mit denen eine Aktualisierung der Funktion des Gerätes erfolgen kann.

Im ersten Zustand Z1 ist dabei basierend auf den Funktionen des PTP wie bereits erläutert eine Synchronisation und eine lokale Zeit der Geräte derart eingestellt, dass das dargestellte Ausführungsbeispiel für exakt aufeinander abgestimmte Zeiteinstellung zumindest der Geräte, für die ein Update/Upgrade in Betracht kommt, gegeben ist. Somit, insbesondere auch periodisch während des laufenden Betriebes wiederholt, die, vorzugsweise gemäß PTP, bereitgestellten Maßnahmen hierzu durchgeführt werden.

Die so verteilten Softwareupdates werden aber noch nicht installiert bzw. ausgeführt.

Liegt kein Softwareupdate vor, verbleibt das System ohne die zusätzlichen Schritte des Ausführungsbeispiels im laufenden Betrieb, was symbolisch durch den Wechsel in den ersten Zustand Z1 dargestellt ist. Symbolisch bedeutet, dass auch im Falle des Erkennens eines Updates der laufende Betrieb beibehalten wird, sich das System also immer im ersten Zustand befindet, aber in diesem zusätzlich die erfindungsgemäßen Schritte durchgeführt werden.

In einem dritten Schritt S3 wird nun von der zentralen Instanz zu jeder Maschine ein exakter und gegebenenfalls individueller erster Zeitpunkt für das Installieren des Updates und ein exakter individueller zweiter Zeitpunkt für das anschließende Aktivieren der neuen Version verteilt. Dies kann wie oben bereits erläutert auf vorteilhafte Weise durch das PTP Protokoll durchgeführt werden.

Diese Zeitpunkte können für mehrere Geräte gleich sein, sie können sich aber auch in Abhängigkeit von Gerätetyp, Upgrade-Verhalten (Umschalt-Latenz) und der Einbettung des Gerätes in das Gesamtsystem unterscheiden.

In einem vierten Schritt S4 wird nun, beispielsweise von der zentralen Instanz, insbesondere durch eine Nachricht und/oder eine andere Art der Signalisierung, scharf geschaltet, d.h. die bei der Verteilung adressierten Maschinen werden nun selbstständig und zu ihren individuellen ersten Zeitpunkten mit der Installation des Upgrades beginnen und/oder in einem fünften Schritt S5 beim Erreichen der jeweiligen zweiten Zeitpunkte nach erfolgreichem Abschluss der Installationen die neue Version aktivieren. Alternativ oder ergänzend ist es auch denkbar, dass zumindest Teile der adressierten Geräte dies ohne externe Triggerung tun bzw. eine dieser beiden Stufen, Installationsstufe und Aktualisierungsstufe, einen Trigger benötigt. Ferner ist es auch denkbar, dass die zentrale Instanz, die die Verteilung vornimmt, eine andere Entität des Systems ist als diejenige, die den Trigger setzt. Also für einen oder mehrere der zweiten bis vierten Schritte S2...S4 für die Durchführung besonders geeignete oder spezialisierte Entitäten als zentrale Instanz fungieren.

Die Installationszeitpunkte müssen lediglich vor dem Zeitpunkt der Aktivierungszeitpunkte liegen und die jeweiligen Installationen müssen erfolgreich abgeschlossen worden sein. Durch die Vorgabe der zweiten Zeitpunkte wird der neuen Version also genügend Zeit eingeräumt, um zu starten, beispielsweise den eigenen Zustand aufzubauen oder zu übernehmen. Diese Mehrstufigkeit, gegeben durch individuelle Installation und die Möglichkeit zeitlich exakt durchgeführter individueller Aktivierung, unterstützt die erfindungsgemäße Softwareaktualisierung im laufenden Betrieb auf besonders effektive Weise.

Mit dem dargestellten Vorgehen, insbesondere das Suspendieren des Aktivschaltens bis zu optimalen individuellen Zeitpunkten im fünften Schritt S5, kann sichergestellt werden, dass das Verhalten aller Geräte, beispielsweise aller Abläufe, Funktionen, Features und auch nicht-funktionalen Eigenschaften, stets kompatibel ist, da das System erfindungsgemäßen Vorgebens der Zeit so orchestriert wird, dass das installierte Softwareupdate auf dem jeweiligen Gerät so, insbesondere parallel zur alten Softwareversion, betrieben wird, dass dessen Verhalten für andere Geräte noch gemäß alter Softwareversion ist und erst wenn die vorgegebenen erfindungsgemäßen, insbesondere individuell abweichenden, Zeitpunkte erreicht werden, sich dies anders darstellt, also ab diesen Zeitpunkten auch für die anderen Geräte das Verhalten gemäß der aktualisierten Software quasi sichtbar wird.

Die Erfindung kann dabei auch derart weitergebildet sein, dass auch Änderungen, die Auswirkungen auf andere, insbesondere nicht adressierte, Geräte haben, mit dieser Weiterbildung entsprechend berücksichtigt werden können.

Als ein nicht dargestellter weiterer Schritt kann alternativ oder ergänzend eine Rückmeldung nach erfolgreicher Installation/Start erfolgen, so dass bei Misserfolg einzelner Installationen, die Aktualisierung so lange suspendiert werden kann, bis dies behoben ist. Denkbar ist es auch die Erfindung so weiterzubilden, dass die zweiten Zeitpunkte erst nach dem erfolgreichen Abschluss aller Installationen unter Einbeziehung der korrelierenden Parameter exakt bestimmt und für jedes Gerät individuell geplant und vorgeben werden.

Durch die Rückmeldung kann auf Fehlerzustände reagiert und diese vor Aktivschaltung mittels einer Fehlerbehebungsprozedur behoben werden.

Mit der Erfindung besteht als ein Hauptvorteil also die Möglichkeit, aufeinander abgestimmte Upgrades im laufenden Betrieb koordiniert auf mehrere Geräte (gleichen oder unterschiedlichen Typs) zu verteilen.

Der oben genannte zentrale Takt- bzw. Zeitgeber verteilt gemäß vorteilhafter Ausgestaltung des Ausführungsbeispiels dabei einmal die GPS-Zeit, also die absolute Zeit und über die MAC mit Hilfe des PTP-Protokolls die relative Zeit mit einer Genauigkeit von ca. +/- 100ns, wobei die Erfindung dabei auch berücksichtigt, dass je nach Laufzeit es einige Minuten dauern kann, bis alle Geräte auf die Zeit synchronisiert sind.

Bei der Implementierung dieses verteilten und koordinierten Upgrades gemäß Ausführungsbeispielen ist gewährleistet, dass die Umschalt-Zeitpunkte aller Geräte exakt aufeinander abgestimmt sind.

Damit kann sichergestellt werden, dass die neuen Software-Versionen zum richtigen Zeitpunkt, aber wie im Ausführungsbeispiel beschrieben nicht zwangsläufig zeitgleich, ihren Betrieb aufnehmen und das Verhalten aller Geräte im Gesamtsystem während und nach dem Umschalten korrekt und aufeinander abgestimmt ist.

Ein weiterer Vorteil der Erfindung und all seiner unter den Schutzbereich der Ansprüche fallenden Weiterbildungen und Kombinationen davon, liegt darin, dass es mit dieser Methode möglich ist, die Häufigkeit kompletter System- oder Anlagenstillstände zu minimieren, da der erfindungsgemäß vereinfachte und kostengünstige Update-/Upgrade-Prozess hingegen häufigere Aktualisierungen im laufenden Betrieb ermöglicht.

Der genannte Vorteil hat als einen weiteren vorteilhaften Nebeneffekt, dass durch das zeitgleiche Installieren und Umschalten zwischen Software-Versionen zudem kritische Zeitspannen minimiert werden, in denen, insbesondere durch die ganz- oder teilweisen Ab- und Anschaltungen verursachte, Stromunterbrechungen oder andere Zwischenfälle zu einem Fehlschlagen des Upgrades führen könnten, so dass die beteiligten Geräte ohne entsprechende Vorkehrungen, beispielsweise Unterstützung von automatischen Versions-Rollbacks, komplett unbrauchbar gemacht werden könnten. Das genannte Rollback kann aber als weitere Weiterbildung dennoch die Erfindung auf vorteilhafte Weise ergänzen und somit unvorhergesehene Zustände bzw. deren negative Folgen abfangen.

Soweit oben Ausdrücke verwendet wurden, die ein grammatikalisches Geschlecht und/oder andere zur Unterscheidung von Menschen geeignete Merkmale zeigen, implizieren oder als solche wahrgenommen werden können, gilt, dass diese Ausdrücke nicht trennend, sondern inklusiv verwendet wurden, d.h. dass alle Menschen - unabhängig von gegebenen, selbst angenommenen oder vermuteten individuellen Merkmalen - als gleichwertig betrachtet werden.

## Patentansprüche

1. Verfahren zur Durchführung einer Softwareaktualisierung in einem aus mehreren Entitäten, insbesondere Maschinen und/oder Geräten, gebildeten System, insbesondere im industriellen Umfeld,
**dadurch gekennzeichnet, dass** eine Verteilung eines Softwareupdates an die Entitäten und zeitlich derart aufeinander abgestimmte lokale Installation des Softwareupdates auf den Entitäten erfolgt, dass zumindest der Start, Ablauf und/oder das systemweite Aktivieren der jeweiligen lokalen Softwareupdates in Abhängigkeit zumindest eines mit zumindest der jeweiligen Entität korrelierenden Parameters zu individuell den Entitäten zugeordneten Zeitpunkten erfolgt.

2. Verfahren nach dem vorhergehenden Anspruch,
**dadurch gekennzeichnet, dass** als korrelierender Parameter zumindest eine Prozesszeiten beeinflussende entitätsbezogene Größe, wie beispielsweise Latenzzeit, Umschaltzeit, auf die Entität wirkende Effekte der Einbettung ins Gesamtsystem, Gerätetyp, Erfolg der Installation des Softwareupdates und andere sich insbesondere zeitkritisch auswirkende Größen, für die Abstimmung berücksichtigt wird.

3. Verfahren nach einem der beiden vorhergehenden Ansprüche, **dadurch gekennzeichnet, dass** als korrelierender Parameter zumindest eine Prozesszeiten beeinflussende systembezogene Größe, wie beispielsweise Systemauslastung, Systemdimension, Systemkomplexität, Systembestandteile und andere sich insbesondere zeitkritisch auswirkende Größen, für die Abstimmung berücksichtigt wird.

4. Verfahren nach einem der beiden vorhergehenden Ansprüche, **dadurch gekennzeichnet, dass** die zumindest eine Prozesszeiten beeinflussenden Größe, insbesondere durch eine zentrale Entität, abrufbar durch manuelle Eingabe und/oder automatisierte Erfassung bereitgestellt sind.

5. Verfahren nach dem vorhergehenden Anspruch,
**dadurch gekennzeichnet, dass** als zentrale Stelle eine mit dem System funktional verbundene, insbesondere in der Steuereinrichtung des Systems integrierte, Steuereinrichtung betrieben wird.

6. Verfahren nach einem der vorhergehenden Ansprüche, **dadurch gekennzeichnet, dass** für die Abstimmung durch die zentrale Stelle eine Synchronisation der lokalen Zeit der Entitäten auf einen, insbesondere im Bereich von +/-100ns maximaler Abweichung liegenden, Wert herbeigeführt wird.

7. Verfahren nach einem der vorhergehenden Ansprüche, **dadurch gekennzeichnet, dass** für die Abstimmung die Entitäten derart betrieben werden, dass deren, als so genannte "Clock" bekannte, Zeitbasis mit einer, insbesondere im Bereich von 1ppm bis 100ppm liegenden, systemangepassten Genauigkeit gewährleistet wird.

8. Verfahren nach einem der beiden vorhergehenden Ansprüche, **dadurch gekennzeichnet, dass** den Entitäten zur Synchronisation zumindest einmal eine, insbesondere eine "Global Positioning System"-, GPS-Zeit und/oder durch hochgenaue, insbesondere Satellitenbasierte, Zeitreferenzsysteme vorgegebene, absolute Zeit sowie die lokale Zeit übermittelt wird.

9. Verfahren nach einem der vorhergehenden Ansprüche, **dadurch gekennzeichnet, dass** für die Abstimmung das System, insbesondere die Entitäten, gemäß dem so genannten, insbesondere gemäß IEEE 1588-2008 spezifizierten, "Precision Timing Protocol", PTP, betrieben wird.

10. Verfahren nach einem der vorhergehenden Ansprüche, **dadurch gekennzeichnet, dass**
a) eine Verteilung eines Softwareupdates auf die das System bildenden Entitäten erfolgt,
b) die Entitäten den jeweiligen Softwareupdates lokal auf den Entitäten speichern,
c) für jede Entität jeweils eine Zeit zur lokalen Durchführung des Softwareupdates auf der Entität vorgegeben wird,
d) die Synchronisierung der jeweiligen lokalen Zeit der Entitäten herbeigeführt wird,
e) die Installation der lokalen Softwareupdates auf Grundlage der Zeitvorgabe erfolgt bis der Softwareupdate für alle Entitäten, die den Softwareupdate gespeichert haben, abgeschlossen ist,
f) eine systemweite Aktivierung der durch das Softwareupdate aktualisierten Software nach Abschluss aller lokal durchgeführten Softwareupdates zu individuell vorgegebenen Zeitpunkten erfolgt.

11. Verfahren nach einem der vorhergehenden Ansprüche, **dadurch gekennzeichnet, dass** die Entitäten derart betrieben werden, dass bis zum Zeitpunkt einer systemweiten Aktivierung der aktualisierten Software, auf den Entitäten, die die Installation des Softwareupdates abgeschlossen haben, eine Inbetriebnahme der aktualisierten Software derart durchgeführt wird, dass ein parallel laufender Betrieb der aktualisierten Software und der vorangegangenen Softwareversion auf der Entität derart entkoppelt erfolgt, dass die real erfassbare Wirkweise, insbesondere Zustände und Funktionen, der Entität in der Zeit des parallelen Betriebs durch die vorangegangene Softwareversion und nach Inbetriebnahme durch die aktualisierte Software bestimmt wird.

12. Verfahren nach einem der vorhergehenden Ansprüche, **dadurch gekennzeichnet, dass** die Aktivierung, insbesondere getriggert durch die Steuereinrichtung bei Abschluss aller lokal durchgeführten Softwareupdates, auf den Entitäten durch Versenden einer Nachricht, durch Erreichen des vorgegebenen Startzeitpunkts und/oder eines aus dem Ablauf der Entitäten zumindest ableitbaren Zeitpunkts ausgelöst wird.

13. Anordnung zur Durchführung einer Softwareaktualisierung in einem aus mehreren Entitäten, insbesondere Maschinen und/oder Geräten, gebildeten System, insbesondere im industriellen Umfeld, **gekennzeichnet durch** Mittel zur Durchführung des Verfahrens nach einem der vorhergehenden Ansprüche.
